# EUROPEAN PATENT SPECIFICATION

(11) **EP 3 417 930 B1**
(45) Date of publication and mention of the grant of the patent: **04.08.2021**
(21) Application number: 17190522.7
(22) Date of filing: 12.09.2017
(51) Int. Cl.: B01F 11/00, B01F 11/02, B01F 13/10, B01F 15/04, B01F 15/02, A45D 34/00, A45D 44/00

(54) **DYE BLENDING DEVICE**
FARBSTOFFMISCHVORRICHTUNG
DISPOSITIF DE MÉLANGE DE COLORANT

(30) Priority: 19.06.2017 TW 106120314
(43) Date of publication of application: 26.12.2018
(73) Proprietor: Cheng, Jing-Da, New Taipei City 238 (TW)
(72) Inventor: Cheng, Jing-Da, New Taipei City 238 (TW); Hsueh, Ting-Fei, Kaohsiung City 831 (TW)
(74) Representative: Becker & Kurig Partnerschaft Patentanwälte PartmbB

(56) References cited:
- EP-A1- 2 025 393
- WO-A1-03/047737
- DE-U1-202007 002 055
- DE-U1-202012 009 072
- US-A- 3 557 077
- US-A1- 2008 305 241
- US-A1- 2016 357 196

## Description

### Field of the invention

The present invention relates to a dye blending device, in particular to a hair dye blending device.

### Description of the prior art

In the existing hair dyeing service, when a customer requires dying, a hairdresser provides a color disk or hair samples having been dyed with different colors for the customer to select, and then use corresponding hair dyes to blend out a specified color after the customer makes a decision.

However, when blending dyes, the ratios of various colors are dependent on the experience of the hairdresser, and the whole dye blending process is extraordinarily complicated, thus consuming a considerable amount of time in the whole process.

To solve the above-described problem, a part of dye suppliers launch a large number of dye sets having blended the dyes properly, thus the consumer can easily select an existing dye color, and the hairdresser can also save the dye blending operation. However, the solution greatly improves the dye purchase cost of a hairdressing salon, and causes unnecessary waste to rarely used dyes.

To sum up, how to provide a solution for automatically blending hair dyes is a technical problem in the art required to be urgently solved.

DE 20 2007 002055 U1 discloses a dye blending device with some features of a dye blending device according to claim 1. It discloses a dosing and filling means for providing individual fragrances, shampoos and cosmetics in hollow tubes. Receptacles with raw materials for perfumes, shampoos and cosmetics are connected via a respective conveyor having a cavity in a mixing device. The cavity comprises a mixing screw arranged fixedly in the mixing device.

### SUMMARY OF THE INVENTION

To solve the above-described problem, present invention aims to provide a technical solution capable of automatically blending dyes.

To reach the above objective, the present invention proposes a dye blending device. The device comprises a plurality of dye containers, a plurality of motors, a plurality of quantitative pumps, a plurality of electronic control valves, a collection zone, a vibrator, and a controller, wherein the dye containers are connectable with a plurality of external dye supplying devices via a pipeline; the motors are connected with the dye containers via the pipeline to apply a pressure to the dye containers; the input ports of the quantitative pumps are connected with the dye containers via the pipeline; one ends of the electronic control valves are connected with the output ports of the quantitative pumps via the pipeline, and the other ends of the electronic valves are connected with the collection zone via the pipeline; the vibrator is disposed in the collection zone; and the controller is connected with the motor, the quantitative pumps, the electronic control valves, and the vibrator, receives a dye blending instruction, instructs the motor to operate and apply a pressure to a specified dye container, enables a quantitative pump and an electronic control valve corresponding to the specified dye container to output a specified dosage of dye to the collection zone, and further enables the vibrator to blend through vibration the mixture dye in the collection zone.

To sum up, the dye blending device of the present invention can automatically blend dyes after receiving a dye blending instruction, thus saving the complicated hair dye blending process for a hairdresser.

### BRIEF DESCRIPTION OF THE DRAWINGS

For a better understanding of the aforementioned embodiments of the invention as well as additional embodiments thereof, reference should be made to the Description of Embodiments below, in conjunction with the following drawings in which like reference numerals refer to corresponding parts throughout the figures.
Fig. 1 is a system block diagram of the dye blending device according to the first embodiment of the present invention;
Fig. 2 is a system block diagram of the dye blending device according to the second embodiment of the present invention;
Fig. 3 is an operation flow chart of the dye blending device according to the present invention;
Fig. 4 and Fig. 5 are schematic diagrams of an operating interfaces of the dye blending device according to the present invention; and
Fig. 6 is a perspective schematic diagram of the dye blending device according to the present invention.

### DETAILED DESCRIPTION OF THE PREFERRED EMBODIMENT

The following description is about embodiments of the present invention; however it is not intended to limit the scope of the present invention.

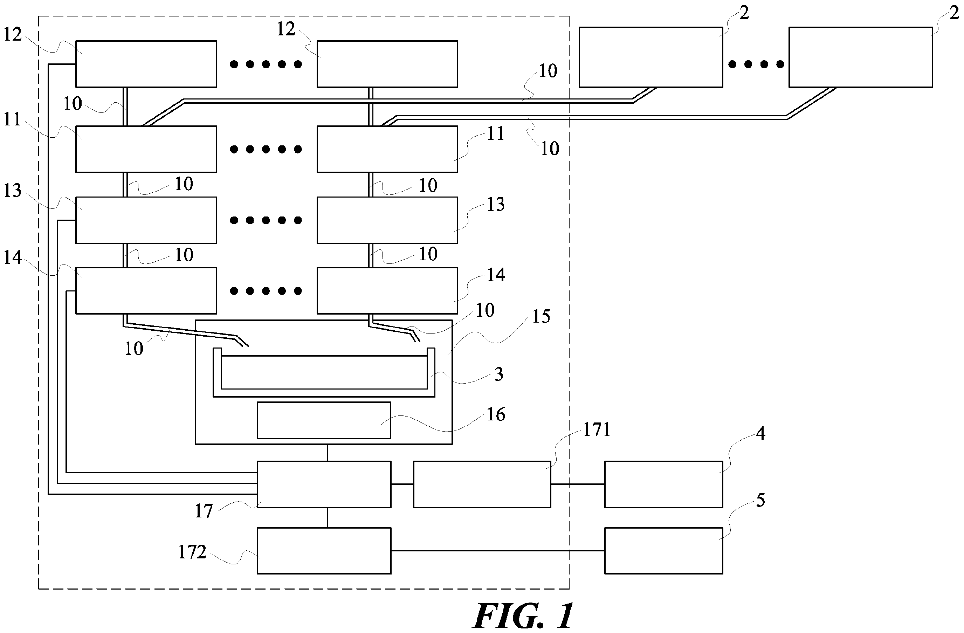

Please refer to Fig. 1 which is a system block diagram of the dye blending device 1 according to the first embodiment of the present invention. The device 1 comprises a plurality of dye containers 11, a plurality of motors 12, a plurality of quantitative pumps 13, a plurality of electronic control valves 14, a vibrator 16, and a controller 17, wherein the plurality of dye containers 11 are connected with a plurality of external dye supplying devices 2 (such as a replaceable dye filling device, a dye box, a dye pot and other containers filled with dyes) via a pipeline 10; the motors 12 are connected with the dye containers 11 via the pipeline 10 to apply a pressure to the dye containers 11; the input ports of the quantitative pumps 13 are connected with the dye containers 11 via the pipeline 10; one ends of the electronic control valves 14 are connected with the output ports of the quantitative pumps 13 via the pipeline 10, and the other ends of the electronic valves 14 are connected with a collection zone 15 via the pipeline 10; the vibrator 16 is disposed in the collection zone 15; and the controller 17 is connected with the motor 12, the quantitative pumps 13, the electronic control valves 14, and the vibrator 16, receives a dye blending instruction, instructs the motor 12 to operate and apply a pressure to a specified dye container 11, enables a quantitative pump 13 and an electronic control valve 14 corresponding to the specified dye container 11 to output a specified dosage of dye to the collection zone 15, and further enables the vibrator 16 to blend through vibration the mixture dye in the collection zone 15.

The controller 17 can adopt a microprocessor circuit, a single chip circuit, a digital circuit, an embedded system controller and the like. The motor 12 can adopt a linear motor or a step motor.

In another embodiment, the dye blending device 1 further comprises an IO interface 171 electronically connected with the controller 17, wherein the IO interface 171 is configured to connect one or a plurality of external electronic devices 4 to receive the dye blending instruction from the electronic device 4. The electronic device 4 can be a touch panel, a screen, a keyboard group and other devices capable of inputting and displaying information.

In another embodiment, the dye blending device 1 further comprises a communication module 172 electronically connected with the controller 17, wherein the communication module 172 is in communication with one or a plurality of external control-end devices 5 to receive the dye blending instruction from the control-end device 5. The control-end device 5 can be a controller, a smart phone, a tablet computer and other electronic calculation devices having a wired/wireless communication function.

In another embodiment, the vibrator 16 comprises at least one of a motor vibrator and an ultrasonic vibrator.

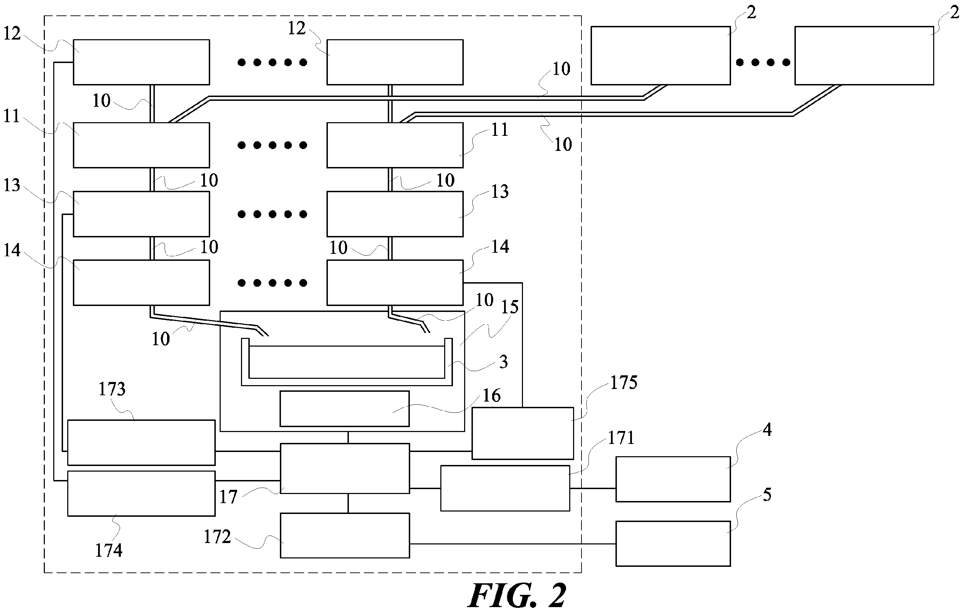

Please refer to Fig. 2 which is a system block diagram of the dye blending device 1 according to the second embodiment of the present invention. The second embodiment is similar to the first embodiment. The only difference is: in the first embodiment, a control circuit or a control program embedded in the controller 17 directly controls the motor 12, the quantitative pumps 13, the electronic control valves 14 or the vibrator 16; and in the second embodiment, an external control sub-module (such as a microprocessor, a single chip, a digital circuit and the like) is adopted for controlling to achieve the modularization design objective and reduce the workload of the controller 17.

The dye blending device 1 further comprises a quantitative pump controller 173 electronically connected with the controller 17, wherein the controller 17 is connected with the quantitative pumps 13 via the quantitative pump controller 173 to configure the output of the quantitative pumps 13. In another embodiment, the dye blending device 1 further comprises a motor controller 174 electronically connected with the controller 17, wherein the controller 17 is connected with the motor 12 via the motor controller 174 to configure the output pressures of the motors. In another embodiment, the dye blending device 1 further comprises an electronic control valve controller 175 electronically connected with the controller 17, wherein the controller 17 is connected with the electronic control valves 14 via the electronic control valve controller 175 to configure the output of the electronic control valves 14. In another embodiment, the dye blending device 1 further comprises a vibration controller 176 electronically connected with the controller 17, wherein the controller 17 is connected with the vibrator 16 via the vibration controller 176 to configure the vibration of the vibrator 16.

In another embodiment, the dye blending device 1 further comprises a plurality of sensors (such as a flow sensor, a pressure sensor, an ultrasonic sensor for measuring stock and the like) electronically connected with the controller 17, wherein the sensors are disposed on the dye containers 11 or the dye supplying devices 2 to detect dye stock.

In another embodiment, the controller 17 of the dye blending device 1 further analyzes the dye stock to provide at least one of dye order information or automatic dye feeding information.

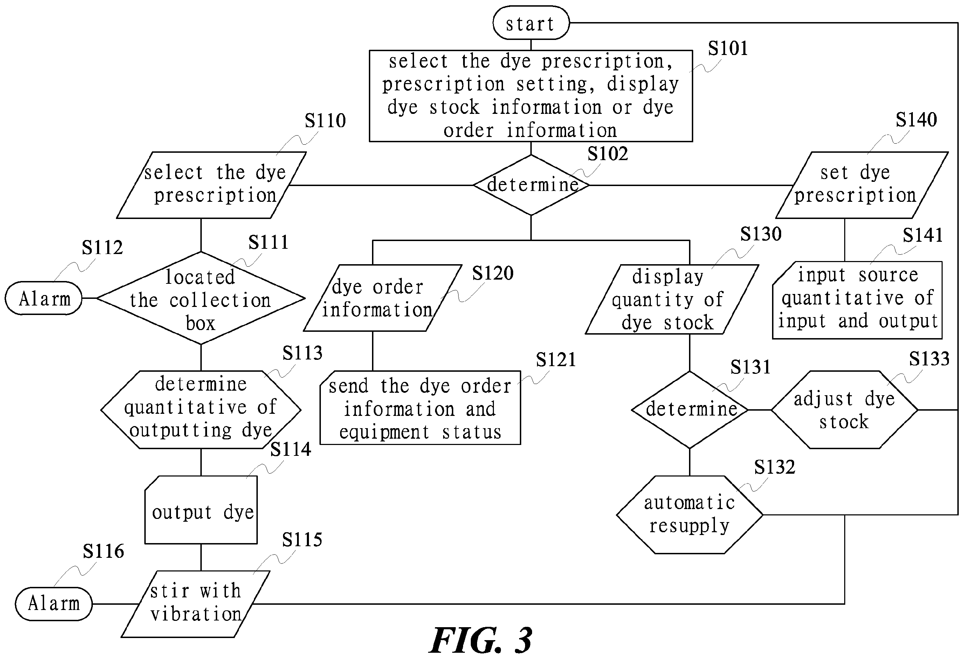

Please refer to Fig. 3 which is an operation flow chart of the dye blending device 1 according to the first and second embodiments of the present invention. The operating steps thereof are described as follows:
S101, when the dye blending device 1 is activated, the controller 17 acquires from the electronic device 4 an operating mode inputted by a user via the IO interface 171, or acquires from the control-end device 5 the operating mode inputted by the user via the communication module 172 (step SI02). In the present step, the following options can be provided for the user to select: (1) prescription selection, (2) prescription setting, (3) stock selection, and (4) purchase order.

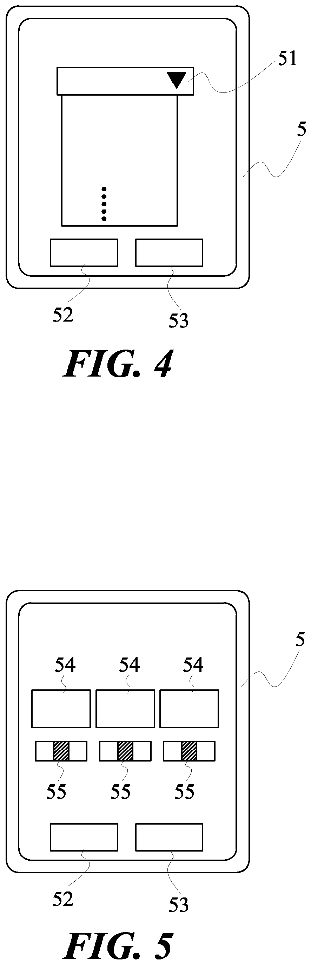

The control-end device 5 will be taken as an example to describe the present invention hereafter. And the electronic device 4 can also achieve the same or similar technical effects. Please refer to Fig. 4 and Fig. 5 which are respectively schematic diagrams of two types of operating menus provided by the control-end device 5. After the control-end device 5 is connected with the dye blending device 1, the control-end device 5 displays (a color to be blended) and a selectable operating interface on a display; when the user selects specific blending information (such as orange), the control-end device 5 transmits the blending information to the controller 17, and triggers the controller 17 to query an operation instruction corresponding to the blending information (as shown in table 1):

**Table 1**

| Color | Color ratio | Operating instruction |
|---|---|---|
| Orange | (yellow, red) = (1, 1) | (1) Enable the motor 12, the quantitative pumps 13 and the electronic control valves 14 corresponding to the dye containers 11 filled with yellow and red dyes to output yellow and red dyes with the dosage ratio of 1: 1 to the collection zone 15. |
| | | (2) Since the output dosage ratio is 1: 1, the motor 12 and the quantitative pumps 13 are specified to output the same power or have the same operating time instruction. |
| Yellow orange | (yellow, red) = (3, 1) | (1) Enable the motor 12, the quantitative pumps 13 and the electronic control valves 14 corresponding to the dye containers 11 filled with yellow and red dyes to output yellow and red dyes with the dosage ratio of 3: 1 to the collection zone 15. |
| | | (2) Since the output dosage ratio is 3: 1, the motor 12 and the quantitative pumps 13 are specified to output different powers or have different operating time instructions. |
| | | (3) For example, if the motor 12 and the quantitative pumps 13 for configuring yellow and red dyes output the same power, then on the same flow rate condition, the operating time of the two sets can be set as 3: 1; on the contrary, if the operating time and flow rate of the two sets are the same, then the output powers of the two sets can be set as 3: 1, and the output of the dyes can be configured in the mode as above. |

Taking the above-described operation as an example, the controller 17 configures the output of the dyes by controlling the operating time and output power (influencing on the pressure applied by the motor 12 on the dye containers 11, and the operating effects of the quantitative pumps 13) of the motor 12, the quantitative pumps 13 and the electronic control valves 14 corresponding to the dye containers 11 filled with yellow and red dyes, or by controlling the open and close time, open and close caliber of the electronic control valves 14. The detailed control mode of dye output is as shown in table 2.

**Table 2 Control mode of dye output**

| | Controlled module | Control parameter |
|---|---|---|
| 1 | Motor 12 | (1) output power (influencing on the pressure applied by the motor 12 on the dye containers 11 or the pipeline 10, and the flow rate of the dye) |
| | | (2) Operating time |
| 2 | Quantitative pump 13 | (1) output power (influencing on the pressure applied by the quantitative pumps 13 on the dye containers 11 or the pipeline 10, and the flow rate of the dye) |
| | | (2) Operating time |
| 3 | Electronic control valve 14 | (1) Open and close time |
| | | (2) Open and close caliber |

To measure dye stocks, a measurement sensor (such as a flow rate sensor, a pressure sensor, an ultrasonic sensor and the like) can be installed at a dye storage position or at a position the dye flows over such as the dye supplying device 2, the pipeline 10, the dye containers 11 and the like to obtain the current dye stocks; and whether to display the dye stocks on the screen of the electronic device 4 or the control-end device 5 is selectable. When the stocks are insufficient, the controller 17 can generate corresponding purchase order information, or the controller 17 triggers the electronic device 4 or the control-end device 5 to generate corresponding purchase order information; the purchase order information is transmitted to the computer of the supplier via a telecommunication network, an Internet or other communication paths to execute an purchase program.

After the user selects the option "prescription selection" via the electronic device 4 or the control-end device 5, the user can click a pull-down menu 51 on the display of the control-end device 5, select the color to be blended, and confirm or cancel the selected option via an Enter key 52 or an Cancel key 53. When the user clicks the Enter key 52, the controller 17 performs determination, then executes step S110 "prescription selection", and operates the corresponding motor 12, the quantitative pumps 13 and the electronic control valves 14 according to the "operating instruction" in table 1. Before the dye is outputted from the outlet of the pipeline 10, a sensing assembly can be disposed in the collection zone 15 (for example, an ultrasonic sensor or a gravity sensor is utilized to sense whether a container is disposed in the collection zone 15) to sense whether a collection container 3 is disposed at a specified position (S111). If no, then executing step S112 "sending an alarm"; and if yes, then sequentially executing step S113 "determining the discharge amount of the pipeline", step S114 "discharging", step S115 "vibrating and stirring"; after the steps above are completed, executing step S116 "sending an alarm once the blending is completed".

After the user selects the option "purchase order" via the electronic device 4 or the control-end device 5, the controller 17 performs determination, then executes step S120 "purchase order", queries which dye is insufficient, executes step S121 "transmitting an order and device status" to generate corresponding order information and the device status information of the dye blending device 1, and transmits the information to the computer of the supplier via a telecommunication network or an Internet.

After the user selects the option "stock selection" via the electronic device 4 or the control-end device 5, the controller 17 performs determination, then executes step S130 "displaying stock", displays the quantity of the dyes in the dye containers 11 on the screen of the electronic device 4 or the control-end device 5, executes step S131 to determine whether step S132 "automatic feeding" or step S133 "adjusting dye stock" should be executed, and notifies whether "automatic feeding" or "adjusting dye stock" is required or not via the screen of the electronic device 4 or the control-end device 5.

After the user selects the option "stock selection" via the electronic device 4 or the control-end device 5, the controller 17 performs determination, then executes step S140 "prescription setting" and step S141 "inputting the serial number of a dye station (the dye supplying device 2 filled with a corresponding dye), and the input and output), and automatically adjusts the color to be blended and the ratio thereof through the operating menus as shown in Fig. 5.

For example, the user can click a color selection key 54 on the control-end device 5 to select a primary color, and use a ratio adjustment axis 55 to adjust the ratio of each color. After the user clicks the Enter key 52, the selected ratio value is stored in an internal memory; and the corresponding motor 12, the quantitative pumps 13, and the electronic control valves 14 are instructed to execute the feeding operation.

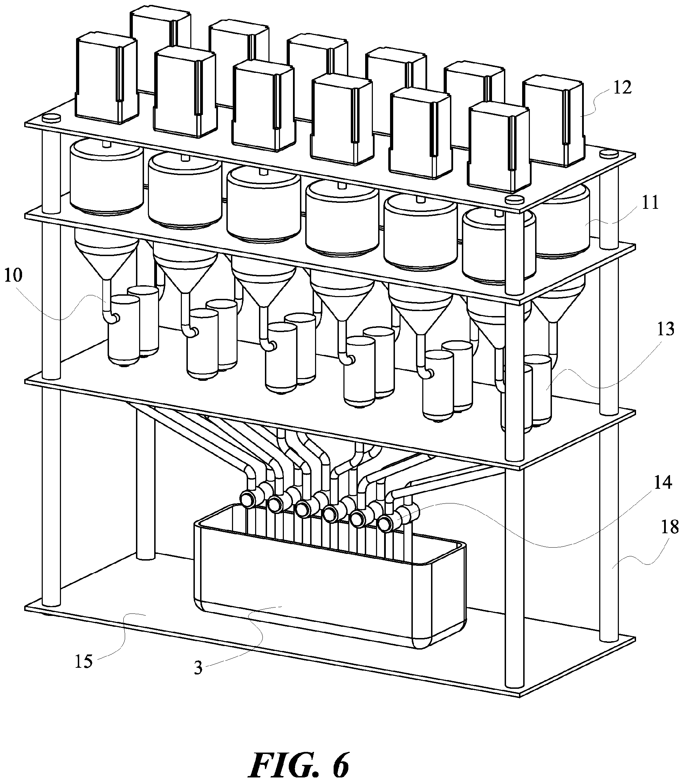

Please refer to Fig. 6 which is a perspective schematic diagram of the dye blending device 1 according to the present invention. In one embodiment, the dye blending device 1 is spatially disposed on a bracket body 18 having multiple layers of parcel shelves. The motor 12, the dye containers 11, the quantitative pumps 13, the electronic control valves 14 which are connected together via the pipeline 10 are sequentially placed from top to bottom; and collection container 3 is disposed in the collection area 15 (on the parcel shelf at the lowermost layer of the bracket body 18).
The above disclosure is related to the detailed technical contents and inventive features thereof.

### REFERENCE LIST

1. dye blending device
10. pipeline
11. dye container
12. motor
13. quantitative pumps
14. electronic control valves
15. collection zone
16. vibrator
17. controller
171. IO interface
172. communication module
173. quantitative pump controller
174. motor controller
175. electronic control valve controller
176. vibration controller
18. bracket body
2. dye supplying devices
3. collection container
4. electronic device
5. control-end devices
51. pull-down menu
52. enter key
53. cancel key
54. color selection key
55. ratio adjustment axis

## Claims

1. A dye blending device (1), comprising:
a plurality of dye containers (11), connectable with a plurality of external dye supplying devices (2) via a pipeline (10);
a plurality of motors (12), connected with the dye containers (11) via the pipeline to apply a pressure to the dye containers (11);
a plurality of quantitative pumps (13), wherein the input ports of the quantitative pumps (13) are connected with the dye containers (11) via the pipeline (10);
a plurality of electronic control valves (14), wherein one ends of the electronic control valves (14) are connected with the output ports of the quantitative pumps (13) via the pipeline (10) and the other ends of the electronic control valves (14) are connected with a collection zone via the pipeline (10);
a vibrator (16), disposed in the collection zone; and
a controller (17), connected with the motor (12), the quantitative pumps (13), the electronic control valves (14), and the vibrator (16), wherein the controller (17) receives a dye blending instruction, instructs the motor (12) to operate and apply a pressure to a specified dye container (11), enables a quantitative pump (13) and an electronic control valve (14) corresponding to the specified dye container (11) to output a specified dosage of dye to the collection zone, and further enables the vibrator (16) to blend the mixture dye in the collection zone.

2. The dye blending device (1) as claimed in claim 1, further comprising an IO interface (171) electronically connected with the controller (17), wherein the IO interface (171) is configured to connect one or a plurality of external electronic devices (4) to receive the dye blending instruction from the electronic device (4).

3. The dye blending device (1) as claimed in claim 1, further comprising a communication module (172) electronically connected with the controller (17), wherein the communication module (172) is configured to communicate with one or a plurality of external control-end devices (5) to receive the dye blending instruction from the control-end device (5).

4. The dye blending device (1) as claimed in claim 1, wherein the vibrator (16) comprises at least one of a motor vibrator and an ultrasonic vibrator.

5. The dye blending device (1) as claimed in claim 1, further comprising a quantitative pump controller (173) electronically connected with the controller (17), wherein the controller (17) is connected with the quantitative pumps (13) via the quantitative pump controller (173) to configure the output of the quantitative pumps (13).

6. The dye blending device (1) as claimed in claim 1, further comprising a motor controller (174) electronically connected with the controller (17), wherein the controller (17) is connected with the motor (12) via the motor controller (174) to configure the output pressures of the motors (12).

7. The dye blending device (1) as claimed in claim 1, further comprising an electronic control valve controller (175) electronically connected with the controller (17), wherein the controller (17) is connected with the electronic control valves (14) via the electronic control valve controller (175) to configure the output of the electronic control valves (14).

8. The dye blending device (1) as claimed in claim 1, further comprising a vibration controller (176) electronically connected with the controller (17), wherein the controller (17) is connected with the vibrator (16) via the vibration controller (176) to configure the vibration of the vibrator (16).

9. The dye blending device as claimed in claim 1, further comprising a plurality of sensors electronically connected with the controller (17), wherein the sensors are disposed on the dye containers (11) or the dye supplying devices to detect dye stock.

10. The dye blending device (1) as claimed in claim 9, wherein the controller (17) further analyzes the dye stock to provide at least one of dye order information or automatic dye feeding information.

## Patentansprüche

1. Farbstoffmischvorrichtung (1), umfassend:
eine Vielzahl von Farbstoffbehältern (11), die mit einer Vielzahl von externen Farbstoffzufuhrvorrichtungen (2) verbunden werden können über eine Rohrleitung (10),
eine Vielzahl von Motoren (12), die mit den Farbstoffbehältern (11) über die Rohrleitung verbunden sind, um einen Druck auf die Farbstoffbehälter (11) auszuüben;
eine Vielzahl von quantitativen Pumpen (13), wobei die Eingangsanschlüsse der quantitativen Pumpen (13) mit den Farbstoffbehältern (11) über die Rohrleitung (10) verbunden sind;
eine Vielzahl von elektronischen Steuerventilen (14), wobei die einen Enden der elektronischen Steuerventile (14) über die Rohrleitung (10) mit den Ausgangsanschlüssen der quantitativen Pumpen (13) verbunden sind und die anderen Enden der elektronischen Steuerventile (14) mit einer Sammelzone über die Rohrleitung (10) verbunden sind;
einen Vibrator (16), der in der Sammelzone angeordnet ist; und
eine Steuerung (17), die mit dem Motor (12), den quantitativen Pumpen (13), den elektronischen Steuerventilen (14) und dem Vibrator (16) verbunden ist, wobei die Steuerung (17) eine Farbstoffmischanweisung empfängt, den Motor (12) anweist, zu arbeiten und einen Druck auf einen bestimmten Farbstoffbehälter (11) auszuüben,
eine quantitative Pumpe (13) und ein elektronisches Steuerventil (14), die dem bestimmten Farbstoffbehälter (11) entsprechen, befähigt, eine bestimmte Dosierung von Farbstoff an die Sammelzone auszugeben, und ferner den Vibrator (16) befähigt, den Mischfarbstoff in der Sammelzone zu mischen.

2. Farbstoffmischvorrichtung (1) gemäß Anspruch 1, die ferner eine IO-Schnittstelle (171) umfasst, die elektronisch mit der Steuerung (17) verbunden ist, wobei die IO-Schnittstelle (171) konfiguriert ist, dass sie eine oder eine Vielzahl externer elektronischer Vorrichtungen (4) verbindet, um die Farbstoffmischanweisung von der elektronischen Vorrichtung (4) zu empfangen.

3. Farbstoffmischvorrichtung (1) gemäß Anspruch 1, ferner umfassend ein Kommunikationsmodul (172), das elektronisch mit der Steuerung (17) verbunden ist, wobei das Kommunikationsmodul (172) konfiguriert ist, dass es mit einer oder einer Vielzahl externer Steuerendvorrichtungen (5) kommuniziert, um die Farbstoffmischanweisung von der Steuerendvorrichtung (5) zu empfangen.

4. Farbstoffmischvorrichtung (1) gemäß Anspruch 1, wobei der Vibrator (16) mindestens einen von einem Motorvibrator und einem Ultraschallvibrator umfasst.

5. Farbstoffmischvorrichtung (1) gemäß Anspruch 1, ferner umfassend eine quantitative Pumpensteuerung (173), die elektronisch mit der Steuerung (17) verbunden ist, wobei die Steuerung (17) über die quantitative Pumpensteuerung (173) mit den quantitativen Pumpen (13) verbunden ist, um die Ausgabe der quantitativen Pumpen (13) zu konfigurieren.

6. Farbstoffmischvorrichtung (1) gemäß Anspruch 1, ferner umfassend eine Motorsteuerung (174), die elektronisch mit der Steuerung (17) verbunden ist, wobei die Steuerung (17) über die Motorsteuerung (174) mit dem Motor (12) verbunden ist, um die Ausgangsdrücke der Motoren (12) zu konfigurieren.

7. Farbstoffmischvorrichtung (1) gemäß Anspruch 1, ferner umfassend eine elektronische Steuerventilsteuerung (175), die elektronisch mit der Steuerung (17) verbunden ist, wobei die Steuerung (17) über die elektronische Steuerventilsteuerung (175) mit den elektronischen Steuerventilen (14) verbunden ist, um die Ausgabe der elektronischen Steuerventile (14) zu konfigurieren.

8. Farbstoffmischvorrichtung (1) gemäß Anspruch 1, ferner umfassend eine Vibrationssteuerung (176), die elektronisch mit der Steuerung (17) verbunden ist, wobei die Steuerung (17) über die Vibrationssteuerung (176) mit dem Vibrator (16) verbunden ist, um die Vibration des Vibrators (16) zu konfigurieren.

9. Farbstoffmischvorrichtung gemäß Anspruch 1, ferner umfassend eine Vielzahl von Sensoren, die elektronisch mit der Steuerung (17) verbunden sind, wobei die Sensoren an den Farbstoffbehältern (11) oder den Farbstoffzuführvorrichtungen angeordnet sind, um Farbstoffvorrat zu erfassen.

10. Farbstoffmischvorrichtung (1) gemäß Anspruch 9, wobei die Steuerung (17) ferner den Farbstoffvorrat analysiert, um zumindest eine von Farbstoffbestellinformationen oder Informationen zur automatischen Farbstoffzufuhr bereitzustellen.

## Revendications

1. Dispositif de mélange de colorant (1), comprenant :
une pluralité de réservoirs de colorant (11) connectables à une pluralité de dispositifs externes d'alimentation en colorant (2) par l'intermédiaire d'un tuyau (10) ;
une pluralité de moteurs (12) connectés au réservoir de colorant (11) par l'intermédiaire du tuyau pour appliquer une pression aux réservoirs de colorant (11) ;
une pluralité de pompes quantitatives (13), les ports d'entrée des pompes quantitatives (13) étant connectés aux réservoirs de colorant (11) par l'intermédiaire du tuyau (10) ;
une pluralité de soupapes de commande électroniques (14), certaines des extrémités des soupapes de commande électroniques (14) étant connectées aux ports de sortie des pompes quantitatives (13) par l'intermédiaire du tuyau (10) et les autres extrémités des soupapes de commande électroniques (14) étant connectées à une zone de collecte par l'intermédiaire du tuyau (10) ;
un vibreur (16) disposé dans la zone de collecte ; et un contrôleur (17) connecté au moteur (12), aux pompes quantitatives (13), aux soupapes de commande électroniques (14) et au vibreur (16), le contrôleur (17) recevant une instruction de mélange de colorant, donnant au moteur (12) l'instruction d'actionner et d'appliquer une pression à un réservoir de colorant spécifié (11), autorisant une pompe quantitative (13) et une soupape de commande électronique (14) correspondant au réservoir de colorant spécifié (11) à délivrer un dosage spécifié de colorant dans la zone de collecte, et autorisant en outre le vibreur (16) à mélanger le colorant du mélange dans la zone de collecte.

2. Dispositif de mélange de colorant (1) selon la revendication 1, comprenant en outre une interface IO (171) connectée électroniquement au contrôleur (17), l'interface IO (171) étant configurée pour connecter l'un d'une pluralité de dispositifs électroniques externes (4) afin de recevoir l'instruction de mélange de colorant de la part du dispositif électronique (4).

3. Dispositif de mélange de colorant (1) selon la revendication 1, comprenant en outre un module de communication (172) connecté électriquement à la commande (17), le module de communication (172) étant configuré pour communiquer avec l'un ou avec une pluralité de dispositifs de fin de commande externes (5) pour recevoir l'instruction de mélange de colorant de la part du dispositif de fin de commande (5).

4. Dispositif de mélange de colorant (1) selon la revendication 1, dans lequel le vibreur (16) comprend au moins un vibreur de moteur et un vibreur ultrasonique.

5. Dispositif de mélange de colorant (1) selon la revendication 1, comprenant en outre un contrôleur de pompe quantitative (173) connecté électriquement au contrôleur (17), le contrôleur (17) étant connecté aux pompes quantitatives (13) par l'intermédiaire du contrôleur de pompes quantitatives (173) pour configurer la sortie des pompes quantitatives (13).

6. Dispositif de mélange de colorant (1) selon la revendication 1, comprenant en outre un contrôleur de moteur (174) connecté électroniquement au contrôleur (17), le contrôleur (17) étant connecté au moteur (12) par l'intermédiaire du contrôleur de moteur (174) pour configurer les pressions de sortie des moteurs (12).

7. Dispositif de mélange de colorant (1) selon la revendication 1, comprenant en outre un contrôleur de soupape électroniques (175) connecté électroniquement au contrôleur (17), le contrôleur (17) étant connecté aux soupapes de commande électroniques (14) par l'intermédiaire du contrôleur de soupape de commande électronique (175) pour configurer la sortie des soupapes de commande électroniques (14).

8. Dispositif de mélange de colorant (1) selon la revendication 1, comprenant en outre un contrôleur de vibration (176) connecté électroniquement au contrôleur (17), le contrôleur (17) étant connecté au vibreur (16) par l'intermédiaire du contrôleur de vibration (176) pour configurer la vibration du vibreur (16).

9. Dispositif de mélange de colorant (1) selon la revendication 1, comprenant en outre une pluralité de capteurs connectés électroniquement au contrôleur (17), les capteurs étant disposés sur les réservoirs de colorant (11) ou des dispositifs d'alimentation en colorant pour détecter le stock de colorant.

10. Dispositif de mélange de colorant (1) selon la revendication 9, dans lequel le contrôleur (17) analyse en outre le stock de colorant pour fournir au moins une information parmi une information d'ordre de colorant ou une information d'alimentation en colorant automatique.
